# EUROPEAN PATENT APPLICATION

(11) **EP 4 697 196 A1**
(43) Date of publication of application: **18.02.2026**
(21) Application number: 23936482.1
(22) Date of filing: 20.12.2023
(51) Int. Cl.: G06F 16/332, G06F 16/338

(54) **INTELLIGENT QUESTION ANSWERING METHOD AND APPARATUS, COMPUTING DEVICE, PROGRAM PRODUCT, AND STORAGE MEDIUM**

(30) Priority: 05.05.2023 CN 202310497803; 07.07.2023 CN 202310833369
(71) Applicant: Huawei Cloud Computing Technologies Co., Ltd., Gui'an New District, Guizhou 550025 (CN)
(72) Inventor: ZHANG, Huilan, Shenzhen, Guangdong 518129 (CN); LI, Chengyuan, Shenzhen, Guangdong 518129 (CN); YANG, Changpeng, Shenzhen, Guangdong 518129 (CN)
(74) Representative: Maiwald GmbH
(86) International application number: PCT/CN2023/140164
(87) International publication number: WO 2024/230178

(57) **Abstract**

This application discloses an intelligent question answering method and apparatus, a computing device, a program product, and a storage medium, and belongs to the artificial intelligence field. The method includes: receiving an original question; determining an importance evaluation result of the original question based on the original question, where the importance evaluation result indicates an answering importance degree of the original question, and the importance evaluation result is determined based on at least one evaluation influencing factor; determining, based on the importance evaluation result, an answer corresponding to the original question in at least one candidate answer, where the at least one candidate answer has a different degree of detail; and outputting the answer corresponding to the original question. That is, in this application, importance of the original question is evaluated, and a degree of detail for answering the original question is determined based on the importance evaluation result, to flexibly answer the original question, avoid answering all questions indiscriminately, and further improve intelligent answering efficiency.

## Description

### TECHNICAL FIELD

This application relates to the artificial intelligence field, and in particular, to an intelligent question answering method and apparatus, a computing device, a program product, and a storage medium.

### BACKGROUND

In the natural language processing field, intelligent question answering is used to answer questions raised by users in a natural language form. Intelligent question answering is usually classified into a generative type and a retrieval-based type. In a retrieval-based intelligent question answering scenario, a computing device receives a question of a user, and retrieves the question from a corpus database. The corpus database includes a plurality of question-answer corpus pairs, and each question-answer corpus pair includes one question and one corresponding answer. If the question is found in the corpus database, a corresponding answer is fed back to the user. If the question is not found in the corpus database, the question is directly ignored or a fixed-script answer is fed back to the user. However, in multi-user online intelligent question answering scenarios such as live-stream bullet comments, a meeting chat, a webinar, and an online class, when there are a large quantity of meaningless questions or there is massive screen flooding of a same question, if the questions are continuously answered according to the foregoing procedure, the computing device may not be able to process an important question, and the entire intelligent question answering procedure may be paralyzed due to an insufficient processing capability of the computing device.

### SUMMARY

This application provides an intelligent question answering method and apparatus, a computing device, a program product, and a storage medium, to flexibly answer massive and diversified questions, and output answers with different degrees of detail for questions with different answering importance degrees. Technical solutions are as follows.

According to a first aspect, an intelligent question answering method is provided. The method includes: receiving an original question; determining an importance evaluation result of the original question, where the importance evaluation result indicates an answering importance degree of the original question, and the importance evaluation result is determined based on at least one evaluation influencing factor; determining, based on the importance evaluation result, an answer corresponding to the original question in at least one candidate answer, where the at least one candidate answer has a different degree of detail; and outputting the answer corresponding to the original question.

It can be learned that, in this application, importance of the original question is evaluated, and a degree of detail for answering the original question is determined based on the importance evaluation result of the original question, so that the original question is flexibly processed, and question answering efficiency is improved. When a quantity of original questions is large, it is avoided that all questions are answered indiscriminately, which causes a computing device to be unable to process a question with a higher priority, and may even cause an entire intelligent question answering procedure to be paralyzed.

Optionally, the method further includes: receiving an evaluation rule configuration request, where the evaluation rule configuration request is used to request to configure one or more of a type, a priority, and a weight of the at least one evaluation influencing factor.

The at least one evaluation influencing factor is configured, so that the computing device can evaluate the importance of the original question with reference to the at least one evaluation influencing factor, thereby improving accuracy of the importance evaluation result of the original question.

Optionally, the type of the at least one evaluation influencing factor includes one or more of a questioner level, a question category, a question frequency, and answering indication information of the original question, the questioner level indicates importance of a questioner, the question category indicates whether the original question is a meaningless question, the question frequency indicates a historical questioning frequency of the original question, and the answering indication information indicates whether the original question has been answered within specified duration before current time.

Optionally, determining the importance evaluation result of the original question includes: determining an evaluation result of the original question under the at least one evaluation influencing factor; and determining the importance evaluation result of the original question based on the evaluation result of the original question under the at least one evaluation influencing factor.

In other words, when the importance of the original question is evaluated, the original question may be separately evaluated based on a plurality of evaluation influencing factors, to determine the importance evaluation result of the original question based on evaluation results of the original question under the plurality of evaluation influencing factors. Because the importance evaluation result considers the plurality of influencing factors, the evaluation result is more reliable, and it is more conducive to accurately determining the answer to the original question.

Optionally, determining, based on the importance evaluation result, the answer corresponding to the original question in the at least one candidate answer includes: determining, based on the importance evaluation result, an answering policy of the original question in a correspondence between an importance evaluation result and an answering policy, where the answering policy indicates fixed-script answering, simple answering, or comprehensive answering, and a degree of detail of an answer corresponding to simple answering is lower than a degree of detail of an answer corresponding to comprehensive answering; and determining, according to the answering policy, the answer corresponding to the original question in the at least one candidate answer.

Based on the importance evaluation result of the original question, whether the original question needs to be answered, a priority of the answer, and a degree of detail of the answer are determined, so that the original question can be flexibly processed, and the question answering efficiency can be improved. When the quantity of original questions is large, it is avoided that all questions are answered indiscriminately and that redundant answers are provided for a large quantity of meaningless questions or a same question, which causes the computing device to be unable to process the question with the higher priority, and may even cause the entire question answering procedure to be paralyzed.

Optionally, the method further includes: determining, in a corpus database in a semantic clustering manner based on the original question, a target fundamental question corresponding to the original question, where the corpus database includes a plurality of fundamental questions and a basic answer corresponding to each fundamental question; and determining the at least one candidate answer based on a basic answer corresponding to the target fundamental question.

The target fundamental question corresponding to the original question is determined in the corpus database in the semantic clustering manner, to determine, based on the basic answer corresponding to the target fundamental question, the answer corresponding to the original question. In this way, questions with different expressions but same semantics can be identified through semantic clustering, and different expressions of a same question are clustered into one fundamental question. Therefore, only basic answers of some fundamental questions need to be configured in the corpus database, so that the corpus database can be used to respond to different forms of questions of the questioner. This greatly saves time for configuring question-answer corpus pairs in the corpus database. In addition, the intelligent question answering procedure is more robust, and can be used for original questions with different expressions in various scenarios.

Optionally, determining the at least one candidate answer based on the basic answer corresponding to the target fundamental question includes: obtaining at least one network answer through network searching based on the original question and/or the target fundamental question; and generating the at least one candidate answer based on the basic answer corresponding to the target fundamental question and the at least one network answer.

Because the corpus database is constructed in advance, basic answers corresponding to fundamental questions are all preset. However, as knowledge is enriched and diversified, an answer corresponding to each fundamental question may have a more accurate and richer expression. Therefore, a network answer to the original question and/or the target fundamental question may be searched by using an information search advantage of the internet, to dynamically generate candidate answers with different degrees of detail corresponding to the original question. In addition, when the original question corresponds to a plurality of candidate answers, it is convenient for the computing device to flexibly determine, in the candidate answers, the answer to the original question. In other words, for a same original question, different candidate answers may also be selected to answer the original question, so that the answers are more personalized.

Optionally, the method further includes: receiving a corpus configuration request, where the corpus configuration request carries a plurality of fundamental question-answer corpus pairs, and each fundamental question-answer corpus pair includes one fundamental question and a basic answer corresponding to the fundamental question; and storing the plurality of fundamental question-answer corpus pairs in the corpus database.

Optionally, the plurality of fundamental question-answer corpus pairs are fundamental question-answer corpus pairs corresponding to a plurality of levels, each level corresponds to at least one fundamental question-answer corpus pair, fundamental question-answer corpus pairs corresponding to different levels have different granularities, and the corpus configuration request further carries identifiers of the plurality of levels; and storing the plurality of fundamental question-answer corpus pairs in the corpus database includes: storing, in the corpus database based on the identifiers of the plurality of levels, the fundamental question-answer corpus pairs corresponding to the plurality of levels.

In other words, when an administrator needs to construct a corpus database, add a new level to an original corpus database, or add a fundamental question-answer corpus pair to an original level of the corpus database, the administrator may send a corpus configuration request to the computing device (or trigger the corpus configuration request in the computing device) through an administrator terminal, and add identifiers of a plurality of levels that need to be configured and a fundamental question-answer corpus pair of each level to the corpus configuration request. In response to the corpus configuration request, the computing device stores, at the corresponding level in the corpus database based on the identifier of the level, a fundamental question-answer corpus pair corresponding to the level. Alternatively, in response to the corpus configuration request, the computing device newly adds at least one level to the corpus database based on the identifier of the level, and correspondingly stores, at the newly added level, a fundamental question-answer corpus pair corresponding to the level.

Optionally, the administrator may further set a target level corresponding to fundamental question-answer corpus pairs that are used for semantic clustering with the original question. In this way, the computing device may obtain, based on the target level preset by the administrator, a plurality of fundamental questions from the fundamental question-answer corpus pairs corresponding to the target level, and perform semantic clustering with the original question, so that the plurality of fundamental questions selected for the original question are more accurate, a calculation amount of semantic clustering is reduced, and semantic clustering efficiency is greatly improved.

It should be noted that the granularity indicates a degree of detail of a description of the fundamental question-answer corpus pair at the level. A granularity of a high level is large, and a question description of a fundamental question corresponding to the high level is macroscopic. A granularity of a low level is small, and a question description of a fundamental question corresponding to the low level is more detailed.

Optionally, the original question includes a first question and a second question; and outputting the answer corresponding to the original question includes: if determining, based on an importance evaluation result of the first question and an importance evaluation result of the second question, that a priority of the first question is higher than a priority of the second question, preferentially outputting an answer corresponding to the first question.

In this way, when the original question includes a plurality of questions, after an answer corresponding to each question is determined, a sequence of answering the questions may be flexibly adjusted based on an importance evaluation result of each question.

According to a second aspect, an intelligent question answering apparatus is provided. The intelligent question answering apparatus has a function of implementing behavior of the intelligent question answering method in the first aspect. The intelligent question answering apparatus includes at least one module, and the at least one module is configured to implement the steps of the intelligent question answering method according to the first aspect.

According to a third aspect, a computing device is provided. The computing device includes a processor and a memory. The memory is configured to store a computer program for performing the intelligent question answering method according to the first aspect. The processor is configured to execute the computer program stored in the memory, to implement the steps of the intelligent question answering method according to the first aspect.

Optionally, the computing device may further include a communication bus, and the communication bus is configured to establish a connection between the processor and the memory.

According to a fourth aspect, a computer-readable storage medium is provided. The storage medium stores instructions. When the instructions are run on a computing device, the computing device is enabled to perform the steps of the intelligent question answering method according to the first aspect.

According to a fifth aspect, a computer program product including instructions is provided. When the instructions are run on a computing device, the computing device is enabled to perform the steps of the intelligent question answering method according to the first aspect. Alternatively, a computer program is provided. When the computer program is run on a computing device, the computing device is enabled to perform the steps of the intelligent question answering method according to the first aspect.

Technical effect achieved in the second aspect, the third aspect, the fourth aspect, and the fifth aspect is similar to the technical effect achieved by corresponding technical means in the first aspect. Details are not described again herein.

### BRIEF DESCRIPTION OF DRAWINGS

FIG. 1 is a schematic flowchart of an intelligent question answering method according to an embodiment of this application;
FIG. 2 is a schematic flowchart of question answering according to an embodiment of this application;
FIG. 3 is a schematic flowchart of another intelligent question answering method according to an embodiment of this application;
FIG. 4 is a diagram of a structure of an intelligent question answering apparatus according to an embodiment of this application;
FIG. 5 is a diagram of a structure of a computing device according to an embodiment of this application;
FIG. 6 is a diagram of a structure of a computing device cluster according to an embodiment of this application; and
FIG. 7 is a diagram of a network connection relationship of computing devices according to an embodiment of this application.

### DESCRIPTION OF EMBODIMENTS

To make objectives, technical solutions, and advantages of embodiments of this application clearer, the following further describes in detail implementations of this application with reference to accompanying drawings.

In some multi-user online intelligent question answering scenarios such as live-stream bullet comments, a meeting chat, a webinar, and an online class, users usually raise a plurality of questions, and a quantity of questions is large. For each question, a computing device implements intelligent question answering by using a pre-constructed corpus database including a plurality of question-answer corpus pairs. When there are a large quantity of meaningless questions or a large quantity of repeated questions, the computing device still answers these redundant questions indiscriminately. As a result, the computing device cannot process a question with a higher priority, and therefore an entire intelligent question answering procedure is paralyzed.

Based on this, this application provides an intelligent question answering method. In the method, importance of an original question is evaluated to determine an answering importance degree of the original question, so that the original question is flexibly answered based on an importance evaluation result of the original question, and for an important original question, an answer output during answering is more detailed.

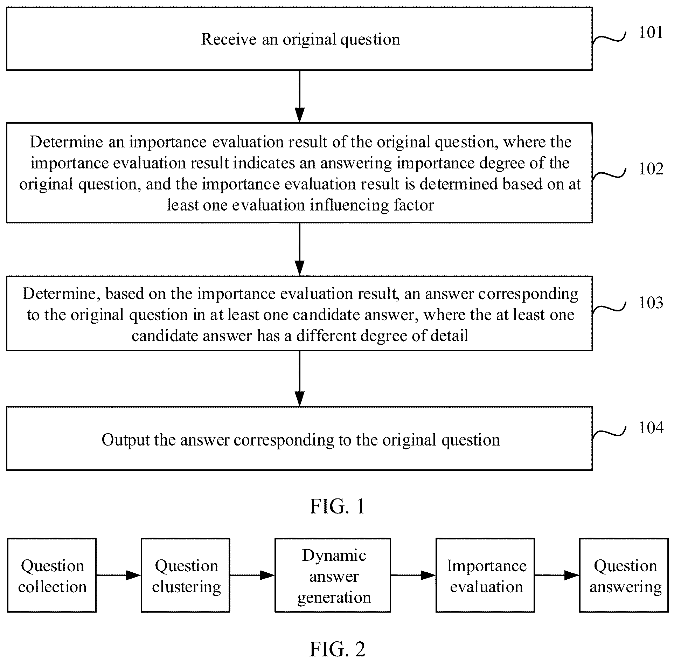

FIG. 1 is a flowchart of an intelligent question answering method according to an embodiment of this application. The method may be applied to any computing device or a computing device cluster including a plurality of computing devices. The method includes the following steps.

Step 101: Receive an original question.

The original question is an original question sent by a questioner by using a questioner terminal, or an original question directly input by the questioner in the computing device. The original question may be presented in any one of a text, a picture, a voice, and the like. In this embodiment of this application, an example in which the original question is a question in a text form is used to describe an intelligent question answering procedure, but this does not constitute a limitation on a question form of the original question.

In some embodiments, if the original question is a question in a voice form, after receiving the original question, the computing device may perform a voice-to-text operation on the original question, to perform the following step 102 and step 103 based on a question text of the original question. To be specific, importance of the original question is evaluated based on the original question in the text form, and an answer corresponding to the original question is determined based on an importance evaluation result of the original question.

Step 102: Determine the importance evaluation result of the original question, where the importance evaluation result indicates an answering importance degree of the original question, and the importance evaluation result is determined based on at least one evaluation influencing factor.

In some embodiments, the computing device may evaluate the importance of the original question with reference to the at least one evaluation influencing factor, to obtain the importance evaluation result.

It should be noted that the at least one evaluation influencing factor used to evaluate the importance of the original question may be an evaluation influencing factor set by an administrator for the computing device for the first time, or may be an evaluation influencing factor obtained by adjusting, based on an actual service requirement, an evaluation influencing factor set for the first time, or may be an evaluation influencing factor newly set by the administrator in the computing device before the original question is received. A quantity of configured evaluation influencing factors and content of the evaluation influencing factor are not limited in embodiments of this application.

It should be noted that the "administrator" herein may be a specified user that manages the intelligent question answering procedure, for example, a host that uses the intelligent question answering procedure to answer questions in live-stream bullet comments (in this case, the computing device is a host-end device, for example, a terminal or a server), a teaching assistant that uses the intelligent question answering procedure to answer questions of a plurality of students (in this case, the computing device is a teaching assistant-end device, for example, a terminal or a server), or a robot that uses the intelligent question answering procedure to perform intelligent interaction with guests; or may be an administrator of another computing device that needs to perform intelligent question answering interaction with a plurality of users. This is not limited in embodiments of this application.

In some embodiments, a process of configuring an evaluation rule is as follows: The computing device receives an evaluation rule configuration request, where the evaluation rule configuration request is used to request to configure one or more of a type, a priority, and a weight of the at least one evaluation influencing factor. Based on this, the computing device stores, based on information carried in the evaluation rule configuration request, the at least one evaluation influencing factor, and a priority and a weight of each evaluation influencing factor.

Optionally, when there are a plurality of configured evaluation influencing factors, the computing device may also select, in response to a configuration of the administrator, a preset quantity of evaluation influencing factors with highest priorities to evaluate the importance of the original question. A quantity of evaluation influencing factors used when the importance of the original question is evaluated is not limited in embodiments of this application.

Questions in live-stream bullet comments are used as an example. Different questions have different importance. A meaningless bullet comment can be selectively blocked, that is, not answered, during question answering. For questions raised by users with different tags, processing priorities also need to be different. For example, for a "first-ranked" user that can bring significant economic benefits, a question of the user needs to be preferentially processed. For a user who only watches the live stream with a low interaction frequency, a question of the user can be processed with a low priority. For same questions that cause massive screen flooding, the questions may be processed with a low priority. In addition, the questions may be selectively processed to avoid repeatedly answering redundant questions. In addition, for a same question that has been answered in a short period of time, the question may also be processed with a low priority, to avoid that the computing device always senses the same question and misses information of another question.

Based on this, the type of the at least one evaluation influencing factor used when the importance of the original question is evaluated may include one or more of a questioner level, a question category, a question frequency, and answering indication information of the original question. The questioner level indicates importance of the questioner, the question category indicates whether the original question is a meaningless question, the question frequency indicates a historical questioning frequency of the original question, and the answering indication information indicates whether the original question has been answered within specified duration before current time.

The specified duration may be any preset value, for example, 1 minute, 5 minutes, or 10 minutes.

For the foregoing live streaming scenario, more evaluation influencing factors may also be added based on an actual service requirement. For example, female users are preferentially responded to, and new followers are preferentially responded to.

In some embodiments, an implementation process of step 102 may be: determining an evaluation result of the original question under the at least one evaluation influencing factor; and determining the importance evaluation result of the original question based on the evaluation result of the original question under the at least one evaluation influencing factor.

The importance evaluation result may be an importance level of the original question or an importance score of the original question, or may be in another form. A representation form of the importance evaluation result is not limited in embodiments of this application. An original question with a high importance level or importance score is important and needs to be preferentially answered by generating an answer. An original question with a low importance level or importance score is less important and can be answered later, or can be simply answered or not answered.

For example, the importance of the original question is evaluated based on a plurality of evaluation influencing factors. If the importance evaluation result is an importance level, an importance evaluation process of the original question may be: separately determining an evaluation level of the original question under each evaluation influencing factor to obtain a plurality of evaluation levels, and then summing up the plurality of evaluation levels to determine the importance level of the original question.

Similarly, if the importance evaluation result is an importance score, an importance evaluation process of the original question may be: separately determining an evaluation score of the original question under each evaluation influencing factor to obtain a plurality of evaluation scores, and then summing up the plurality of evaluation scores to determine the importance score of the original question.

It should be understood that, if an evaluation standard of importance evaluation is different from an evaluation standard of each evaluation influencing factor, after evaluation results of the original question under the plurality of evaluation influencing factors are summed, a summation result further needs to be converted according to the evaluation standard of importance evaluation, to obtain the importance evaluation result of the original question.

In an example, the evaluation standard of the evaluation influencing factor uses a ten-level scale, an evaluation level of the original question under each evaluation influencing factor may range from a level 1 to a level 10, and the evaluation standard of importance evaluation uses a five-level scale. If a result of summing up an evaluation level of the original question under the at least one evaluation influencing factor is a level 8, it is determined that the importance evaluation result of the original question is a level 4.

In another example, the evaluation standard of the evaluation influencing factor uses a 100-point scale, an evaluation score of the original question under each evaluation influencing factor may range from 0 to 100 points, and the evaluation standard of importance evaluation uses a ten-point scale. If a result of summing up an evaluation score of the original question under the at least one evaluation influencing factor is 80 points, it is determined that the importance evaluation result of the original question is 8 points.

In some embodiments, different types of evaluation influencing factors have different degrees of influence on the importance evaluation result of the original question. Therefore, a priority or a weight may be set for each evaluation influencing factor, so that when the importance of the original question is evaluated, an important influencing factor that influences the importance evaluation result can be focused on.

In a possible implementation, an example in which a plurality of evaluation influencing factors and a priority of each evaluation influencing factor are configured is used, and an implementation process of determining the importance evaluation result of the original question may be: determining an evaluation level of the original question under each evaluation influencing factor; and determining the importance evaluation result of the original question based on the evaluation level of each evaluation influencing factor and the priority of each evaluation influencing factor.

In other words, after the evaluation level of the original question under each evaluation influencing factor is determined, weighted summation is performed on evaluation levels and priorities of the evaluation influencing factors. Then, a weighted summation result is converted according to an evaluation standard of an importance evaluation result to obtain the importance evaluation result of the original question.

In an example, there are three evaluation influencing factors whose evaluation standards use a ten-level scale: an evaluation influencing factor a, an evaluation influencing factor b, and an evaluation influencing factor c, a priority of the evaluation influencing factor a is 1, a priority of the evaluation influencing factor b is 2, and a priority of the evaluation influencing factor c is 5. It is assumed that an evaluation level of the original question under the evaluation influencing factor a is a level 8, an evaluation level of the original question under the evaluation influencing factor b is a level 2, and an evaluation level of the original question under the evaluation influencing factor c is a level 5. In this case, weighted summation (8*1+2*2+5*5=37) is performed on the evaluation level of the original question under the evaluation influencing factor a and the priority of the evaluation influencing factor a, the evaluation level of the original question under the evaluation influencing factor b and the priority of the evaluation influencing factor b, and the evaluation level of the original question under the evaluation influencing factor c and the priority of the evaluation influencing factor c. It is assumed that the evaluation standard of an importance evaluation result uses a five-level scale. In this case, after a weighted summation result is converted, it is determined that the importance evaluation result of the original question is a level 1.85.

In a possible implementation, an example in which a plurality of evaluation influencing factors and a weight of each evaluation influencing factor are configured is used, and an implementation process of determining the importance evaluation result of the original question may be: determining an evaluation score of the original question under each evaluation influencing factor; and determining the importance evaluation result of the original question based on the evaluation score of each evaluation influencing factor and the weight of each evaluation influencing factor.

In other words, after the evaluation score of the original question under each evaluation influencing factor is determined, weighted summation is performed on evaluation scores and weights of the evaluation influencing factors. Then, a weighted summation result is converted according to an evaluation standard of an importance evaluation result to obtain the importance evaluation result of the original question.

In an example, there are three evaluation influencing factors whose evaluation standards use a 100-point scale: an evaluation influencing factor d, an evaluation influencing factor e, and an evaluation influencing factor f, a weight of the evaluation influencing factor d is 0.8, a weight of the evaluation influencing factor e is 0.2, and a weight of the evaluation influencing factor f is 0.6. It is assumed that an evaluation score of the original question under the evaluation influencing factor d is 70 points, an evaluation score of the original question under the evaluation influencing factor e is 80 points, and an evaluation score of the original question under the evaluation influencing factor f is 30 points. In this case, weighted summation (70*0.8+80*0.2+30*0.6=90) is performed on the evaluation score of the original question under the evaluation influencing factor d and the weight of the evaluation influencing factor d, the evaluation score of the original question under the evaluation influencing factor e and the weight of the evaluation influencing factor e, and the evaluation score of the original question under the evaluation influencing factor f and the weight of the evaluation influencing factor f. It is assumed that the evaluation standard of an importance evaluation result uses a ten-point scale. In this case, after a weighted summation result is converted, it is determined that the importance evaluation result of the original question is 9 points.

Optionally, for some meaningless original questions, it may be directly determined that importance evaluation results of the original questions are a level 0 or 0 points; or when importance of such meaningless original questions is evaluated, evaluation results corresponding to the "question category" in the foregoing evaluation influencing factor may be determined as a level 0 or 0 points. This is not limited in embodiments of this application.

Step 103: Determine, based on the importance evaluation result, an answer corresponding to the original question in at least one candidate answer, where the at least one candidate answer has a different degree of detail.

Before the foregoing step 103 is described, an implementation process in which the computing device determines the at least one candidate answer is first described.

In multi-user online intelligent question answering scenarios such as live-stream bullet comments, a meeting chat, a webinar, and an online class, there are usually a plurality of questions. Considering that different users have different expression habits, there may be a plurality of different questioning manners for a same question. If intelligent question answering is implemented by pre-constructing a corpus database including a plurality of question-answer corpus pairs, the administrator of the computing device needs to configure corresponding answers for different expressions of a same question, which causes a large amount of repetitive work. In addition, it is difficult for the administrator to exhaust all expressions of a question. Therefore, for some questions for which the administrator does not configure answers, the computing device may ignore these questions because there are no preset answers, thereby reducing user experience. In addition, during question answering, if the computing device always uses the question-answer corpus pairs in the preset corpus database to answer questions, when the user repeatedly raises a question, the computing device cannot generate an answer with a larger amount of information, and still repeatedly provides a same answer based on the question-answer corpus pairs in the corpus database, resulting in poor user experience.

Based on this, in this embodiment of this application, a target fundamental question corresponding to the original question may be determined in the corpus database based on the received original question, and then the at least one candidate answer corresponding to the original question is determined based on a basic answer corresponding to the target fundamental question in the corpus database. To be specific, questions with different expressions but same semantics are identified, and a plurality of questions with same semantics are clustered into one fundamental question. Therefore, the corpus database can be used to respond to different forms of questions of the questioner only by configuring a basic answer to the fundamental question in the corpus database. In addition, for the different forms of questions of the questioner, in this embodiment of this application, the answer corresponding to the original question is selected from the candidate answer with reference to the importance evaluation result of the original question, to flexibly answer questions of different questioners, in different forms, and with different content.

In some embodiments, an implementation process of determining the at least one candidate answer of the original question may include the following steps:
(1) Determine, in the corpus database in a semantic clustering manner based on the original question, the target fundamental question corresponding to the original question, where the corpus database includes a plurality of fundamental questions and a basic answer corresponding to each fundamental question.

Through semantic clustering, a plurality of original questions with same semantics but different expressions may be clustered into a same fundamental question, and each fundamental question corresponds to one semantic feature.

In other words, through semantic clustering, the target fundamental question that can reflect a semantic feature of the original question may be determined in the plurality of fundamental questions in the corpus database. When there is one original question, there is also one determined target fundamental question. When there are a plurality of original questions, there may be one or more determined target fundamental questions, depending on whether semantic features of the plurality of original questions are the same or similar. When a deviation between the semantic features of the plurality of original questions is within a semantic deviation range, the plurality of original questions may be different expressions of same semantics, and correspond to a same target fundamental question.

In some embodiments, a configuration process of the corpus database may be: The computing device receives a corpus configuration request, where the corpus configuration request carries a plurality of fundamental question-answer corpus pairs, and each fundamental question-answer corpus pair includes one fundamental question and a basic answer corresponding to the fundamental question. The computing device stores the plurality of fundamental question-answer corpus pairs in the corpus database.

In a possible implementation, the plurality of fundamental question-answer corpus pairs are fundamental question-answer corpus pairs corresponding to a plurality of levels, each level corresponds to at least one fundamental question-answer corpus pair, fundamental question-answer corpus pairs corresponding to different levels have different granularities, and the corpus configuration request further carries identifiers of the plurality of levels. Based on this, after receiving the corpus configuration request, the computing device stores, in the corpus database based on the identifiers of the plurality of levels, the fundamental question-answer corpus pairs corresponding to the plurality of levels.

In other words, when the administrator needs to construct a corpus database, add a new level to an original corpus database, or add a fundamental question-answer corpus pair to an original level of the corpus database, the administrator may send a corpus configuration request to the computing device (or trigger the corpus configuration request in the computing device) through an administrator terminal, and add identifiers of a plurality of levels that need to be configured and a fundamental question-answer corpus pair of each level to the corpus configuration request. In response to the corpus configuration request, the computing device stores, at the corresponding level in the corpus database based on the identifier of the level, a fundamental question-answer corpus pair corresponding to the level. Alternatively, in response to the corpus configuration request, the computing device newly adds at least one level to the corpus database based on the identifier of the level, and correspondingly stores, at the newly added level, a fundamental question-answer corpus pair corresponding to the level.

In some embodiments, the corpus database includes a plurality of corpus scenarios, for example, live streaming, a meeting chat, a webinar, and an online class. Each corpus scenario corresponds to one category tree. The category tree includes a plurality of levels, granularities of the levels are different, each level includes at least one category node, and each category node corresponds to at least one fundamental question.

It should be noted that the granularity indicates a degree of detail of a description of a fundamental question-answer corpus pair at the level. A granularity of a high level is large, and a question description of a fundamental question corresponding to a category node of the high level is macroscopic. A granularity of a low level is small, and a question description of a fundamental question corresponding to a category node of the low level is more detailed.

A live streaming scenario is used as an example. A category tree corresponding to the live streaming scenario may include a first level, a second level, a third level, and a fourth level. The first level includes a category node 1, and category description information of the category node 1 is live streaming. The second level includes a category node 2, a category node 3, and a category node 4, category description information of the category node 2 is shopping, category description information of the category node 3 is games, and category description information of the category node 4 is entertainment. The third level includes a category node 5 to a category node 30. The category node 2 at the second level is used as an example. The category node 2 is subdivided into the category node 5, a category node 6, a category node 7, and a category node 8 at the third level. Category description information of the category node 5 is clothing, category description information of the category node 6 is household appliances, category description information of the category node 7 is food, and category description information of the category node 8 is tourism services. The fourth level includes a category node 31 to a category node 60. The category node 5 at the third level is used as an example. The category node 5 is subdivided into the category node 31, a category node 32, a category node 33, a category node 34, a category node 35, and a category node 36 at the fourth level. Category description information of the category node 31 is tops, category description information of the category node 32 is trousers, category description information of the category node 33 is shoes, category description information of the category node 34 is hats and headwear, category description information of the category node 35 is bags, and category description information of the category node 36 is underwear. By analogy, as the level increases, category description information set for a category node of the level is more detailed, so that a more specific and refined category can be defined.

The category node 31 is used as an example. Fundamental questions corresponding to the category node 31 may include: how much the clothing costs, what the material of the clothing is, how to select a size of the clothing, and the like. A quantity of fundamental questions and content of the fundamental question that can be set for a category node are not limited in embodiments of this application.

Optionally, based on the category tree in each corpus scenario in the corpus database, the administrator may further set a target level, that is, a level of the plurality of fundamental questions selected from the corpus database when the target fundamental question corresponding to the original question is determined through semantic clustering. If the administrator does not set the target level, fundamental questions corresponding to category nodes at the lowest level may be selected by default, or fundamental questions corresponding to category node at all levels may be selected. This is not limited in embodiments of this application.

For example, if the original question is a question obtained in the live streaming scenario, and the target level set by the administrator is the third level, a plurality of fundamental questions corresponding to the category node 5 to the category node 30 at the third level are selected from the corpus database, and the target fundamental question corresponding to the original question is determined in the semantic clustering manner based on the plurality of selected fundamental questions.

In this way, based on a collection scenario of the original question and the target level preset by the administrator, the plurality of fundamental questions may be obtained from fundamental question-answer corpus pairs corresponding to the target level, so that the fundamental questions selected for the original question are more accurate, a calculation amount of semantic clustering performed based on the corpus database is reduced, and semantic clustering efficiency is greatly improved.

In some embodiments, an implementation process of determining, in the semantic clustering manner based on the corpus database, the target fundamental question corresponding to the original question may be: determining a semantic feature vector of the original question; determining semantic similarities between the original question and the plurality of fundamental questions based on the semantic feature vector of the original question and semantic feature vectors of the plurality of fundamental questions; and determining, in the plurality of fundamental questions based on the semantic similarities, the target fundamental question corresponding to the original question.

Optionally, before the semantic feature vector of the original question is determined, noise filtering may be further performed on the original question, to filter out information that interferes with or is useless for semantic feature extraction, for example, noise information such as emoji expressions, symbols, websites, and dialogue quotation, so as to obtain the semantic feature vector corresponding to the original question based on the original question after filtering.

In a possible implementation, for the original question and the plurality of fundamental questions, a semantic feature vector corresponding to each question may be determined by using a convolution operation. For an implementation of determining the semantic feature vector, refer to another related technology. This is not limited in embodiments of this application.

After the semantic feature vector of the original question and the semantic feature vectors of the plurality of fundamental questions are determined, a semantic similarity between each fundamental question and the original question may be determined based on a distance between the semantic feature vector of the original question and a semantic feature vector of each fundamental question. A shorter distance between semantic feature vectors indicates a higher semantic similarity, and a longer distance between semantic feature vectors indicates a lower semantic similarity.

A distance between semantic feature vectors may be determined based on a Euclidean distance, a Manhattan distance, a cosine distance, or the like. This is not limited in embodiments of this application.

In a possible implementation, the target fundamental question corresponding to the original question may be determined, based on the semantic similarities between the original question and the plurality of fundamental questions and a semantic threshold, in at least one fundamental question whose semantic similarity with the original question is greater than or equal to the semantic threshold.

The semantic threshold may be a set semantic feature deviation value, and is used to determine whether there is semantic relevance between two semantic feature vectors. When a semantic similarity between the two semantic feature vectors is greater than or equal to the semantic threshold, it is considered that the two semantic feature vectors have semantic relevance, and are highly likely to correspond to different expressions of same semantics. When a semantic similarity between the two semantic feature vectors is less than the semantic threshold, it is considered that the two semantic feature vectors may not have semantic relevance, and do not correspond to different expressions of same semantics.

It should be noted that, when there is one fundamental question whose semantic similarity is greater than or equal to the semantic threshold, the fundamental question is directly determined as the target fundamental question corresponding to the original question. When there are a plurality of fundamental questions whose semantic similarities are greater than or equal to the semantic threshold, one target fundamental question may be randomly determined in the plurality of fundamental questions, or the target fundamental question may be determined in the plurality of fundamental questions according to a selection policy. This is not limited in embodiments of this application.

In some embodiments, an implementation process of determining, in the semantic clustering manner based on the corpus database, the target fundamental question corresponding to the original question may be: inputting the original question and the plurality of fundamental questions into a question clustering model, and determining, by using the question clustering model, the target fundamental question corresponding to the original question in the plurality of fundamental questions, to output the target fundamental question corresponding to the original question.

The question clustering model is a neural network model pre-trained by using a training dataset. The training dataset includes a plurality of groups of training data, and each group of training data includes a plurality of questions and one fundamental question. The fundamental question is a question manually set based on semantic features of the plurality of questions, and the plurality of questions have same semantics as the fundamental question. In other words, the plurality of questions in each group of training data describe the fundamental question semantically, but express differently.

In a possible implementation, a training process of the question clustering model is: inputting the plurality of questions in each group of training data into a to-be-trained initial question clustering model based on the constructed training dataset, to obtain a predicted question output by the initial question clustering model based on the plurality of questions in each group of training data; and performing iterative training on the initial question clustering model based on the predicted question corresponding to each group of training data and the fundamental question in each group of training data, to obtain a trained question clustering model after training ends.

In an example, a training end condition includes: a quantity of iterations reaches a preset total quantity of training times, a semantic deviation between the predicted question output by the initial question clustering model and the corresponding fundamental question is within a preset semantic deviation range, or a semantic deviation between the predicted question output by the initial question clustering model and the fundamental question does not change within a preset iteration round. This is not limited in embodiments of this application.

In some embodiments, an implementation process of determining, in the semantic clustering manner based on the corpus database, the target fundamental question corresponding to the original question may be: performing character comparison between the original question and the plurality of fundamental questions, determining a quantity of same characters between each fundamental question and the original question, and then determining, in the plurality of fundamental questions based on the quantity of same characters, the target fundamental question corresponding to the original question.

In an example, a fundamental question with a highest quantity of same characters may be determined as the target fundamental question corresponding to the original question. Alternatively, the plurality of fundamental questions may be first sorted in descending order of quantities of same characters based on the quantities of same characters, then at least two fundamental questions whose quantities of same characters rank highest are selected as candidates based on a sorting result of the quantities of same characters, and further the target fundamental question corresponding to the original question is determined in the at least two candidate fundamental questions according to a selection policy. This is not limited in embodiments of this application.

It should be noted that, in the foregoing embodiments, the plurality of fundamental questions that are used for semantic clustering with the original question may be all fundamental questions in the corpus database, may be some fundamental questions in the corpus database, or may be a plurality of fundamental questions, in the corpus database, corresponding to the target level set by the administrator. This is not limited in embodiments of this application.

In addition, to ensure that each original question can be aggregated to a corresponding target fundamental question, a fundamental question that identifies a meaningless question may also be set. When semantic similarities between a semantic feature vector of an original question and semantic feature vectors of a plurality of fundamental questions are all lower than the semantic threshold, it is determined that a target fundamental question corresponding to the original question is the fundamental question that identifies a meaningless question.

In an example, for an original question collected by using a bullet comment in the live streaming scenario, if content of the original question is statement content with a fixed format and an expressive tone, such as "666", "1", and "xx checked in", it may be determined that a target fundamental question corresponding to the original question is the fundamental question that identifies a meaningless question. In this way, the original question may be answered according to subsequent step 103 and step 104, or the meaningless question may be directly blocked, that is, such an original question is not answered.

In an example, when there are a large quantity of malicious bullet comments in live streaming, a fundamental question that identifies a malicious question may be further set. In this case, when it is determined that a target fundamental question corresponding to an original question is the fundamental question that identifies a malicious question, a fixed-script answer may be generated. For example, when question content of the original question includes uncivilized words, it is determined that the answer corresponding to the original question is an appeal for the audience to use civilized words; or when question content of the original question is confrontational and intended to incite conflict, it is determined that the answer corresponding to the original question is an appeal for the audience to speak rationally and avoid stirring up trouble. This is not limited in embodiments of this application.

In this way, it is ensured that a corresponding target fundamental question can be determined for each original question through semantic clustering, and no question is omitted or overlooked, so that each original question can be processed, and question clustering effect is better.

In the foregoing embodiment, semantic clustering is performed on the original question, so that questions with different expressions but same semantics can be identified, and different expressions of a same question are clustered into one fundamental question. Therefore, only basic answers of some fundamental questions need to be configured in the corpus database, so that the corpus database can be used to respond to different forms of questions of the questioner. This greatly saves time for configuring fundamental question-answer corpus pairs in the corpus database. In addition, the intelligent question answering procedure is more robust, and can be used for original questions with different expressions in various scenarios.

(2) Determine the at least one candidate answer based on the basic answer corresponding to the target fundamental question.

In a possible implementation, because the target fundamental question can accurately reflect the semantic feature of the original question, the basic answer to the target fundamental question can also answer the original question. Therefore, when the basic answer corresponding to the target fundamental question exists in the corpus database, the basic answer corresponding to the target fundamental question may be directly determined as the answer corresponding to the original question.

Optionally, the at least one candidate answer may be further generated based on some fixed scripts that can be used to answer the question, to enrich a quantity of candidate answers, so as to select different candidate answers for answering based on the importance evaluation result of the original question.

In an example, candidate answers generated based on the fixed scripts may be: the answer will be provided later, please wait patiently; this question has been answered, please check the historical question records; and please describe the question accurately. This is not limited in embodiments of this application.

Because the corpus database is constructed in advance, basic answers corresponding to fundamental questions are all preset. However, as knowledge is enriched and diversified, an answer corresponding to each fundamental question may have a more accurate and richer expression. Therefore, a network answer to the original question and/or the target fundamental question may be searched by using an information search advantage of the internet, to dynamically generate the answer corresponding to the original question.

In another possible implementation, an implementation process of determining the at least one candidate answer may be: obtaining at least one network answer through network searching based on the original question and/or the target fundamental question; and generating the at least one candidate answer based on the basic answer corresponding to the target fundamental question and the at least one network answer.

That is, generating the at least one candidate answer based on the network answer of the network search includes the following three manners:

Manner 1: Obtain at least one first network answer through network searching based on the original question, and then combine the basic answer corresponding to the target fundamental question and the at least one first network answer to generate the at least one candidate answer.

In an example, if first network answers obtained through searching based on the original question includes a network answer A and a network answer B, the network answer A and the basic answer corresponding to the target fundamental question may be combined to obtain a first candidate answer, and the network answer B and the basic answer corresponding to the target fundamental question may be combined to obtain a second candidate answer, and the network answer A, the network answer B, and the basic answer corresponding to the target fundamental question may be combined to obtain a third candidate answer.

Manner 2: Obtain at least one second network answer through network searching based on the target fundamental question, and then combine the basic answer corresponding to the target fundamental question and the at least one second network answer to generate the at least one candidate answer.

In an example, if a network answer C is obtained through searching based on the target fundamental question, the network answer C and the basic answer corresponding to the target fundamental question may be combined to obtain a fourth candidate answer.

It should be noted that even if only one network answer is found, the network answer may include a large amount of information or a small amount of information. When the network answer and the basic answer corresponding to the target fundamental question are combined, one candidate answer may be generated, or a plurality of candidate answers may be generated. This is not limited in embodiments of this application.

Manner 3: Obtain at least one first network answer through network searching based on the original question, obtain at least one second network answer through network searching based on the target fundamental question, and then combine the basic answer corresponding to the target fundamental question with the at least one first network answer and the at least one second network answer to generate the at least one candidate answer.

In an example, if first network answers include a network answer A and a network answer B, and the second network answer includes a network answer C, the network answer A, the network answer C, and the basic answer corresponding to the target fundamental question may be combined to obtain a fifth candidate answer, the network answer B, the network answer C, and the basic answer corresponding to the target fundamental question may be combined to obtain a sixth candidate answer, and the network answer A, the network answer B, the network answer C, and the basic answer corresponding to the target fundamental question may be combined to obtain a seventh candidate answer.

It should be noted that, when the at least one candidate answer is generated based on the basic answer corresponding to the target fundamental question and the at least one network answer, the network answer and the basic answer may alternatively be combined or spliced by using a pre-trained neural network model, so that the obtained candidate answer is expressed more smoothly, more clearly, and more in line with a practical natural language expression habit.

In this way, the computing device may search for the network answer to the original question and/or the target fundamental question based on the basic answer corresponding to the target fundamental question by using a network search capability, to integrate the basic answer and the network answer, and generate the at least one candidate answer corresponding to the original question. Therefore, diversity of answer content is enriched, so that the computing device can flexibly answer different questioners and different types of questions according to different answering policies, so that answers are more personalized.

In some embodiments, after network searching is performed based on the original question and/or the target fundamental question, the basic answer corresponding to the target fundamental question in the corpus database may be further improved based on the found network answer, to improve accuracy of the basic answer in the question-answer corpus pair in the corpus database, and therefore improve accuracy of answering the original question by the computing device.

In some embodiments, the computing device may further store and integrate a plurality of original questions that are aggregated to each fundamental question, and modify and improve the fundamental question in the corpus database and a basic answer corresponding to each fundamental question based on information carried in the plurality of original questions, to improve accuracy of clustering the original questions based on the fundamental question in the corpus database and accuracy of the basic answer corresponding to each fundamental question, and therefore improve accuracy of answering the original questions by the computing device.

After the at least one candidate answer with a different degree of detail is generated for the original question, a degree of detail of the answer corresponding to the original question may be flexibly determined according to the foregoing step 103. For a same original question, answers with different degrees of detail may also be used based on different questioners, so that the answers are more personalized.

In some embodiments, an implementation process of step 103 may include the following steps:
(1) Determine, based on the importance evaluation result, an answering policy of the original question in a correspondence between an importance evaluation result and an answering policy, where the answering policy indicates fixed-script answering, simple answering, or comprehensive answering, and a degree of detail of an answer corresponding to simple answering is lower than a degree of detail of an answer corresponding to comprehensive answering.

In a possible implementation, the correspondence between an importance evaluation result and an answering policy is preconfigured by the administrator. The computing device receives a policy configuration request, where the policy configuration request carries the correspondence between an importance evaluation result and an answering policy. Then, the computing device stores the correspondence between an importance evaluation result and an answering policy, to search the correspondence between an importance evaluation result and an answering policy for the corresponding answering policy based on the importance evaluation result of the original question.

In an example, the answering policy of comprehensive answering corresponds to a high level range or a high score range, and fixed-script answering corresponds to a low level range or a low score range. When the importance level of the original question is in the high level range, or the importance score of the original question is in the high score range, the answering policy corresponding to the original question is comprehensive answering. When the importance level of the original question is in the low level range, or the importance score of the original question is in the low score range, the answering policy corresponding to the original question is fixed-script answering. When the importance level of the original question is neither in the high level range nor in the low level range, or the importance score of the original question is neither in the high score range nor in the low score range, the answering policy corresponding to the original question is simple answering.

In another possible implementation, the correspondence between an importance evaluation result and an answering policy may alternatively be determined in real time. To be specific, the computing device determines a correspondence between the original question and the answering policy based on a quantity of original questions received at a current moment.

An upper limit of a quantity of questions and a lower limit of the quantity of questions are values configured by the administrator. To be specific, the computing device receives a policy configuration request, where the policy configuration request carries the upper limit of the quantity of questions, the lower limit of the quantity of questions, and answering policies. Then, the computing device stores the upper limit of the quantity of questions and the lower limit of the quantity of questions, to determine the answering policy corresponding to the original question based on the importance evaluation result of the original question.

In an example, if the quantity of original questions received at the current moment is greater than the upper limit of the quantity of questions, it is determined that the answering policy of the original question is fixed-script answering; if the quantity of original questions received at the current moment is less than the lower limit of the quantity of questions, it is determined that the answering policy of the original question is comprehensive answering; or if the quantity of original questions received at the current moment is greater than the lower limit of the quantity of questions and less than the upper limit of the quantity of questions, it is determined that the answering policy of the original question is simple answering.

In some embodiments, it may be further determined, based on an evaluation threshold, whether to use the candidate answer to answer the original question simply or in detail, or use a fixed script to answer the original question. The evaluation threshold is any preset value that is not 0.

When the importance level of the original question is less than or equal to the evaluation threshold, or the importance score of the original question is less than or equal to the evaluation threshold, it is determined that the answering policy of the original question is fixed-script answering. When the importance level of the original question is greater than the evaluation threshold, or the importance score of the original question is greater than the evaluation threshold, it is determined that the answering policy of the original question is simple answering or comprehensive answering, that is, selecting the answer to the original question from the at least one candidate answer.

In some embodiments, for an original question whose importance level is less than the evaluation threshold or whose importance score is less than the evaluation threshold, it may alternatively be directly determined that an answer corresponding to the original question is null. In other words, the answer to the original question is not output, and the original question is not answered.

(2) Determine, according to the answering policy, the answer corresponding to the original question in the at least one candidate answer.

When the answer corresponding to the original question is selected from the at least one candidate answer according to the answering policy, candidate answers may be first sorted in descending order of quantities of characters based on the quantities of characters included in the candidate answers, and a sorting result of the quantities of characters is used as a sorting result of degrees of detail of the candidate answers, where a degree of detail of a candidate answer with a large quantity of characters is higher than a degree of detail of a candidate answer with a small quantity of characters. Then, the answer corresponding to the original question is determined in the at least one candidate answer based on the sorting result of the degrees of detail of the candidate answers.

In a possible implementation, when the importance level or the importance score of the original question is high, the answer corresponding to the original question may be determined in candidate answers that rank highest based on a sorting result of degrees of detail of candidate answers; or when the importance level or the importance score of the original question is low, the answer corresponding to the original question may be determined in candidate answers that rank lowest based on a sorting result of degrees of detail of candidate answers.

In an example, the importance evaluation result of the original question is the importance score. If there are three candidate answers, and a sorting result of degrees of detail of the candidate answers is: candidate answer x>candidate answer y>candidate answer z, when the importance score of the original question is 80 points, the candidate answer x or the candidate answer y with a higher degree of detail is selected as the answer corresponding to the original question; or when the importance score of the original question is 35 points, the candidate answer y or the candidate answer z with a lower degree of detail is selected as the answer corresponding to the original question. This is not limited in embodiments of this application.

In a possible implementation, an evaluation value range corresponding to each candidate answer is determined based on the evaluation standard of importance evaluation, a quantity of candidate answers, and a sorting result of degrees of detail of candidate answers; and a candidate answer corresponding to the original question is determined based on the importance score of the original question and the evaluation value range corresponding to each candidate answer, and the candidate answer is used as the answer corresponding to the original question. In other words, the evaluation standard of importance evaluation is divided based on the quantity of candidate answers to obtain the evaluation value range corresponding to each candidate answer, and then a candidate answer corresponding to an evaluation value range in which the importance evaluation result of the original question is located is determined as the answer corresponding to the original question.

In an example, the importance evaluation result of the original question is the importance score. If there are four candidate answers, degrees of detail of the four candidate answers are sorted as follows: candidate answer m>candidate answer n>candidate answer p>candidate answer q, and a scoring standard of importance scoring is a 100-point scale, it is determined that a score value range of the candidate answer m is (75, 100], a score value range of the candidate answer n is (50, 75], a score value range of the candidate answer p is (25, 50], and a score value range of the candidate answer q is (0, 25]. Based on this, when the importance score of the original question is 50 points, the candidate answer p is selected as the answer corresponding to the original question; and when the importance score of the original question is 85 points, the candidate answer m is selected as the answer corresponding to the original question.

Step 104: Output the answer corresponding to the original question.

In some embodiments, when a presentation form of the answer corresponding to the original question is different from a question form of the original question, the answer corresponding to the original question may be output based on the question form of the original question, to enhance question-and-answer experience.

In an example, when the original question is raised by the questioner in a voice manner, after determining the answer corresponding to the original question, the computing device may also output the answer corresponding to the original question in an audio form.

In some embodiments, when the original question includes a plurality of questions, after an answer corresponding to each question is determined, a sequence of answering the questions may be flexibly adjusted based on an importance evaluation result of each question.

The original question includes a first question and a second question. In a possible implementation, an implementation process of step 104 may be: if determining, based on an importance evaluation result of the first question and an importance evaluation result of the second question, that a priority of the first question is higher than a priority of the second question, preferentially outputting an answer corresponding to the first question.

In an example, after importance of the first question and the second question is evaluated, if an importance level of the first question is higher than an importance level of the second question, it is determined that the priority of the first question is higher than the priority of the second question.

In another example, after importance of the first question and the second question is evaluated, if an importance score of the first question is higher than an importance score of the second question, it is determined that the priority of the first question is higher than the priority of the second question.

In conclusion, in this embodiment of this application, for the received original question, the computing device first evaluates the importance of the original question based on the at least one evaluation influencing factor, to obtain the importance evaluation result of the original question, where the importance evaluation result indicates the answering importance degree of the original question. Then, the answer corresponding to the original question is determined in the at least one candidate answer with the different degree of detail based on the importance evaluation result, and the answer corresponding to the original question is output. In this way, the importance of the original question is evaluated, and a priority and a degree of detail for answering the original question are determined based on the importance evaluation result of the original question, so that the original question is flexibly processed, and question answering efficiency is improved. When the quantity of original questions is large, it is avoided that all questions are answered indiscriminately and that redundant answers are provided for a large quantity of meaningless questions or a same question, which causes the computing device to be unable to process a question with a higher priority, and may even cause the entire intelligent question answering procedure to be paralyzed.

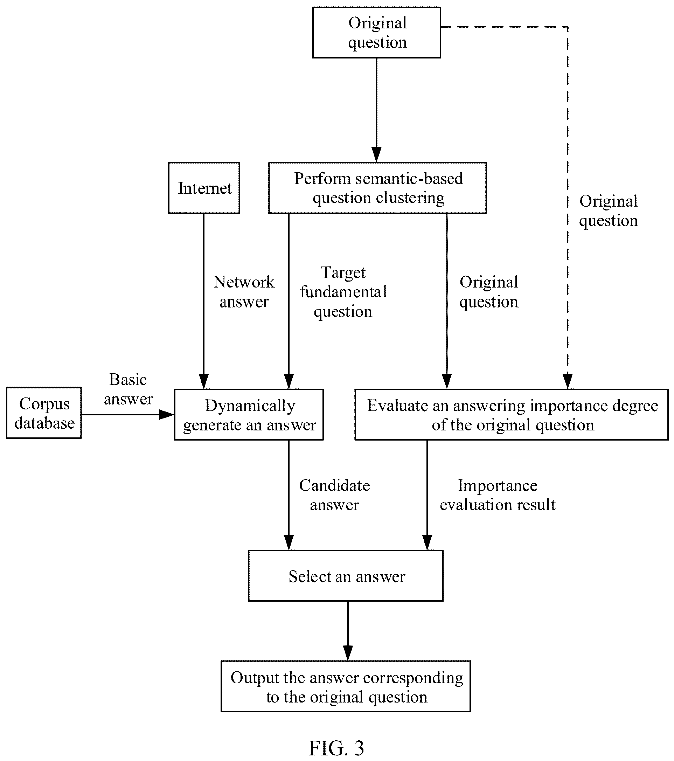

Based on the foregoing embodiment, with reference to FIG. 2 and FIG. 3, the following describes an example of a specific implementation process from receiving an original question to outputting an answer corresponding to the original question by a computing device.

FIG. 2 is a diagram of a question answering procedure according to an embodiment of this application. With reference to FIG. 2, the computing device collects the original question in a target scenario, performs question clustering on the original question to determine a target fundamental question corresponding to the original question, and then dynamically generates, with reference to a basic answer corresponding to the target fundamental question in a corpus database, at least one candidate answer corresponding to the original question. For the at least one dynamically generated candidate answer, an answer corresponding to the original question is selected from the at least one candidate answer based on an importance evaluation result of the original question, to answer the original question.

The target scenario may be a live streaming scenario, an intelligent customer service scenario, an intelligent interaction scenario, or the like. This is not limited in embodiments of this application. The live streaming scenario is used as an example. The computing device may collect the original question from live-stream bullet comments.

Specifically, with reference to a schematic flowchart of an intelligent question answering method shown in FIG. 3, for the received original question, a semantic clustering operation is performed on the original question to determine the target fundamental question corresponding to the original question. In an aspect, after the target fundamental question is determined by using the semantic clustering operation, the basic answer corresponding to the target fundamental question may be determined in a fundamental question-answer corpus pair of the corpus database based on the target fundamental question, searching is performed in a network based on the target fundamental question and/or the original question to obtain a network answer, and then the basic answer corresponding to the target fundamental question and the network answer obtained through searching are integrated to dynamically generate the at least one candidate answer that can be used to answer the original question and that has a different degree of detail. In another aspect, after the target fundamental question is determined by using the semantic clustering operation, or when the original question is received (which corresponds to a dashed arrow in FIG. 3), importance evaluation is performed for an answering importance degree of the original question, to obtain an importance evaluation result of the original question.

For the at least one generated candidate answer with the different degree of detail, during question answering, a candidate answer is selected as the answer corresponding to the original question based on the importance evaluation result of the original question, to output the answer corresponding to the original question.

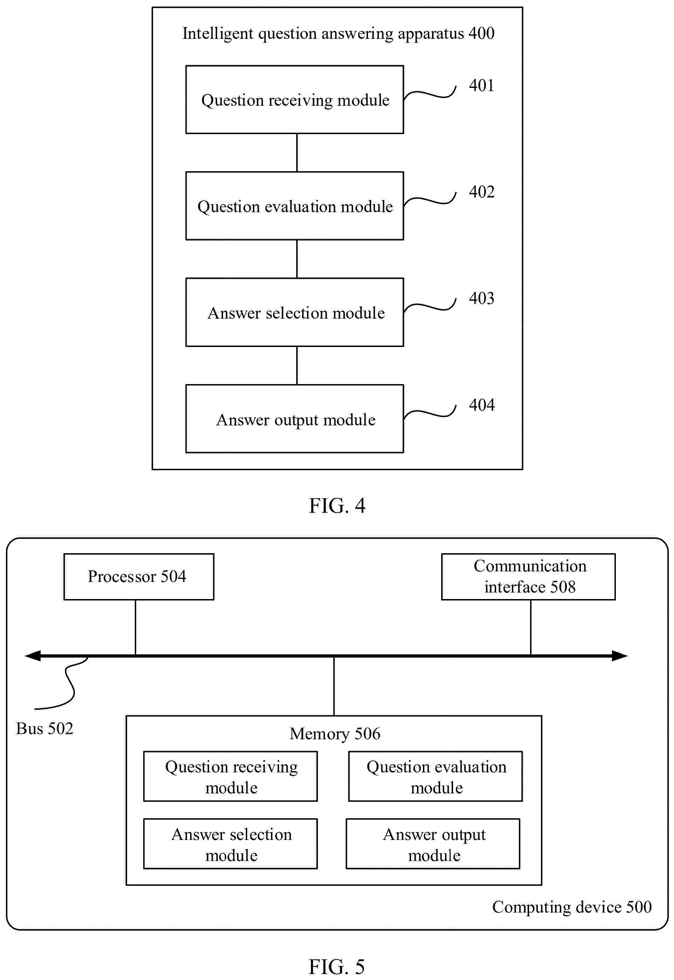

FIG. 4 is a diagram of a structure of an intelligent question answering apparatus according to an embodiment of this application. The intelligent question answering apparatus 400 includes:
a question receiving module 401, configured to receive an original question, where for a detailed implementation process, reference is made to related content in step 101, and details are not described herein again;
a question evaluation module 402, configured to determine an importance evaluation result of the original question, where the importance evaluation result indicates an answering importance degree of the original question, and the importance evaluation result is determined based on at least one evaluation influencing factor, where for a detailed implementation process, reference is made to related content in step 102, and details are not described herein again;
an answer selection module 403, configured to determine, based on the importance evaluation result, an answer corresponding to the original question in at least one candidate answer, where the at least one candidate answer has a different degree of detail, where for a detailed implementation process, reference is made to related content in step 103, and details are not described herein again; and
an answer output module 404, configured to output the answer corresponding to the original question, where for a detailed implementation process, reference is made to related content in step 104, and details are not described herein again.

Optionally, the intelligent question answering apparatus 400 further includes:
a first configuration module, configured to receive an evaluation rule configuration request, where the evaluation rule configuration request is used to request to configure one or more of a type, a priority, and a weight of the at least one evaluation influencing factor.

Optionally, the type of the at least one evaluation influencing factor includes one or more of a questioner level, a question category, a question frequency, and answering indication information of the original question, the questioner level indicates importance of a questioner, the question category indicates whether the original question is a meaningless question, the question frequency indicates a historical questioning frequency of the original question, and the answering indication information indicates whether the original question has been answered within specified duration before current time.

Optionally, the question evaluation module 402 is specifically configured to:
determine an evaluation result of the original question under the at least one evaluation influencing factor; and
determine the importance evaluation result of the original question based on the evaluation result of the original question under the at least one evaluation influencing factor.

Optionally, the answer selection module 403 includes:
a policy determining unit, configured to determine, based on the importance evaluation result, an answering policy of the original question in a correspondence between an importance evaluation result and an answering policy, where the answering policy indicates fixed-script answering, simple answering, or comprehensive answering, and a degree of detail of an answer corresponding to simple answering is lower than a degree of detail of an answer corresponding to comprehensive answering; and
an answer selection unit, configured to determine, according to the answering policy, the answer corresponding to the original question in the at least one candidate answer.

Optionally, the intelligent question answering apparatus 400 further includes:
a question clustering module, configured to determine, in a corpus database in a semantic clustering manner based on the original question, a target fundamental question corresponding to the original question, where the corpus database includes a plurality of fundamental questions and a basic answer corresponding to each fundamental question; and
an answer determining module, configured to determine the at least one candidate answer based on a basic answer corresponding to the target fundamental question.

Optionally, the answer determining module is specifically configured to:
obtain at least one network answer through network searching based on the original question and/or the target fundamental question; and
generate the at least one candidate answer based on the basic answer corresponding to the target fundamental question and the at least one network answer.

Optionally, the intelligent question answering apparatus 400 further includes:
a second configuration module, configured to receive a corpus configuration request, where the corpus configuration request carries a plurality of fundamental question-answer corpus pairs, and each fundamental question-answer corpus pair includes one fundamental question and a basic answer corresponding to the fundamental question; and
a corpus storage module, configured to store the plurality of fundamental question-answer corpus pairs in the corpus database.

Optionally, the plurality of fundamental question-answer corpus pairs are fundamental question-answer corpus pairs corresponding to a plurality of levels, each level corresponds to at least one fundamental question-answer corpus pair, fundamental question-answer corpus pairs corresponding to different levels have different granularities, and the corpus configuration request further carries identifiers of the plurality of levels; and
the corpus storage module is specifically configured to:
store, in the corpus database based on the identifiers of the plurality of levels, the fundamental question-answer corpus pairs corresponding to the plurality of levels.

Optionally, the original question includes a first question and a second question; and
the answer output module 404 is specifically configured to:
if it is determined based on an importance evaluation result of the first question and an importance evaluation result of the second question that a priority of the first question is higher than a priority of the second question, preferentially output an answer corresponding to the first question.

In this embodiment of this application, for the received original question, the intelligent question answering apparatus first evaluates importance of the original question based on the at least one evaluation influencing factor, to obtain the importance evaluation result of the original question, where the importance evaluation result indicates the answering importance degree of the original question. Then, the answer corresponding to the original question is determined in the at least one candidate answer with the different degree of detail based on the importance evaluation result, and the answer corresponding to the original question is output. In this way, the importance of the original question is evaluated, and a priority and a degree of detail for answering the original question are determined based on the importance evaluation result of the original question, so that the original question is flexibly processed, and question answering efficiency is improved. When a quantity of original questions is large, it is avoided that all questions are answered indiscriminately and that redundant answers are provided for a large quantity of meaningless questions or a same question, which causes a computing device to be unable to process a question with a higher priority, and may even cause the entire intelligent question answering procedure to be paralyzed.

It should be noted that when the intelligent question answering apparatus provided in the foregoing embodiment performs intelligent question answering, division into the foregoing functional modules is merely used as an example for description. During actual application, the foregoing functions may be allocated as required to different functional modules for implementation, that is, an internal structure of the apparatus is divided into different functional modules to implement all or some of the functions described above. In addition, the foregoing embodiments of the intelligent question answering apparatus and the intelligent question answering method pertain to a same concept. For a specific implementation process of the apparatus, refer to the method embodiment. Details are not described herein again.

The question receiving module 401, the question evaluation module 402, the answer selection module 403, and the answer output module 404 may all be implemented by using software or hardware.

For example, the following uses the question receiving module 401 as an example to describe an implementation of the question receiving module 401. Similarly, for implementations of the question evaluation module 402, the answer selection module 403, and the answer output module 404, refer to the implementation of the question receiving module 401.

A module is used as an example of a software functional unit, and the question receiving module 401 may include code run on a compute instance. The compute instance may include at least one of a physical host (computing device), a virtual machine, and a container. Further, there may be one or more compute instances. For example, the question receiving module 401 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. For communication between two VPCs in a same region and cross-region communication between VPCs in different regions, a communication gateway needs to be disposed in each VPC, and interconnection between the VPCs is implemented through communication gateways.

A module is used as an example of a hardware functional unit, and the question receiving module 401 may include at least one computing device, for example, a server. Alternatively, the question receiving module 401 may be a device implemented by an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), a generic array logic (generic array logic, GAL), or any combination thereof.

A plurality of computing devices included in the question receiving module 401 may be distributed in a same region or different regions. The plurality of computing devices included in the question receiving module 401 may be distributed in a same AZ, or may be distributed in different AZs. Similarly, the plurality of computing devices included in the question receiving module 401 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the question receiving module 401 may be configured to perform any step in the intelligent question answering method, the question evaluation module 402 may be configured to perform any step in the intelligent question answering method, the answer selection module 403 may be configured to perform any step in the intelligent question answering method, and the answer output module may be configured to perform any step in the intelligent question answering method. In other words, steps implemented by the question receiving module 401, the question evaluation module 402, the answer selection module 403, and the answer output module 404 may be specified as required, and the question receiving module 401, the question evaluation module 402, the answer selection module 403, and the answer output module 404 separately implement different steps in the intelligent question answering method to implement all functions of the intelligent question answering apparatus.

FIG. 5 is a diagram of a structure of a computing device according to an embodiment of this application. The computing device 500 includes a bus 502, a processor 504, a memory 506, and a communication interface 508. The processor 504, the memory 506, and the communication interface 508 communicate with each other through the bus 502. The computing device 500 may be a server or a terminal device. It should be understood that a quantity of processors and a quantity of memories in the computing device 500 are not limited in this application.

The bus 502 may be a peripheral component interconnect (peripheral component interconnect, PCI) bus, an extended industry standard architecture (extended industry standard architecture, EISA) bus, or the like. The bus may be classified as an address bus, a data bus, a control bus, or the like. For ease of representation, the bus is represented by using only one line in FIG. 5. However, it does not mean that there is only one bus or only one type of bus. The bus 502 may include a path for transferring information between components (for example, the memory 506, the processor 504, and the communication interface 508) of the computing device 500.

The processor 504 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 506 may include a volatile memory (volatile memory), for example, a random access memory (random access memory, RAM). The processor 504 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 506 stores executable program code. The processor 504 executes the executable program code to separately implement functions of the question receiving module 401, the question evaluation module 402, the answer selection module 403, and the answer output module 404, to implement the intelligent question answering method. In other words, the memory 506 stores instructions used to perform the intelligent question answering method.

The communication interface 508 uses a transceiver module, for example, but not limited to, a network interface card or a transceiver, to implement communication between the computing device 500 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

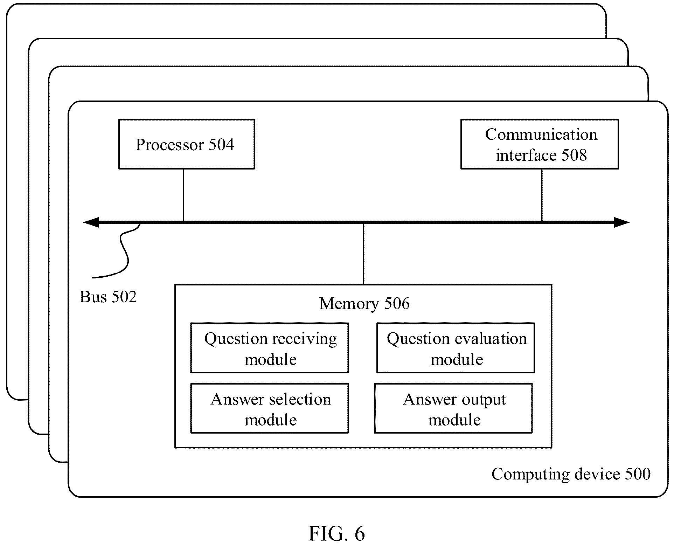

As shown in FIG. 6, the computing device cluster includes at least one computing device 500. A memory 506 in one or more computing devices 500 in the computing device cluster may store same instructions used to perform the intelligent question answering method.

In some possible implementations, the memory 506 in the one or more computing devices 500 in the computing device cluster each may alternatively store a part of the instructions used to perform the intelligent question answering method. In other words, a combination of the one or more computing devices 500 may jointly execute the instructions used to perform the intelligent question answering method.

It should be noted that memories 506 in different computing devices 500 in the computing device cluster may store different instructions separately used to perform parts of functions of the intelligent question answering apparatus. In other words, the instructions stored in the memories 506 in the different computing devices 500 may implement functions of one or more of the question receiving module 401, the question evaluation module 402, the answer selection module 403, and the answer output module 404.

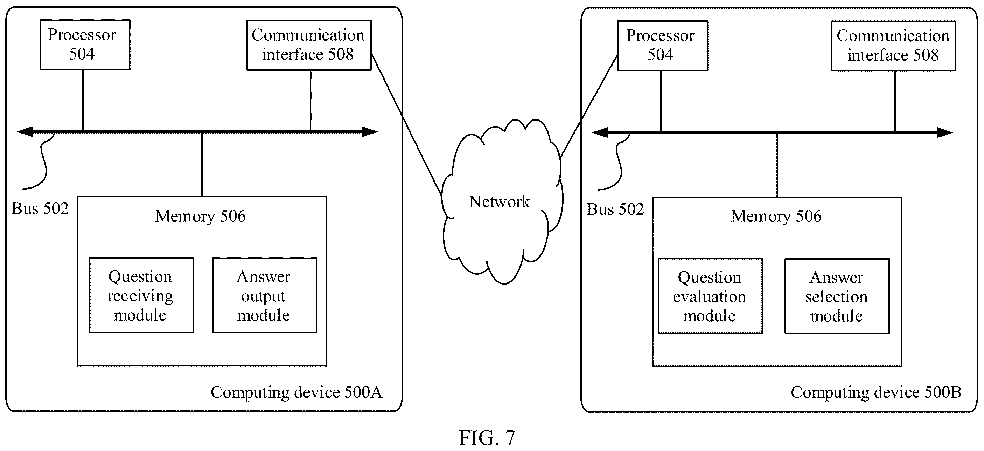

In some possible implementations, the one or more computing devices in the computing device cluster may be connected through a network. The network may be a wide area network, a local area network, or the like. FIG. 7 shows a possible implementation. As shown in FIG. 7, two computing devices 500A and 500B are connected through a network. Specifically, each computing device is connected to the network through a communication interface in the computing device. In this possible implementation, a memory 506 of the computing device 500A stores instructions for performing functions of the question receiving module 401 and the answer output module 404. In addition, a memory 506 in the computing device 500B stores instructions for performing functions of the question evaluation module 402 and the answer selection module 403.

A connection manner between computing device clusters shown in FIG. 7 may be as follows: In consideration of that in the intelligent question answering method provided in this application, a large quantity of collected original questions need to be clustered, and answers with different degrees of detail need to be generated to answer the original questions, it is considered that the functions implemented by the question evaluation module 402 and the answer selection module 403 are performed by the computing device 500B.

It should be understood that functions of the computing device 500A shown in FIG. 7 may alternatively be completed by a plurality of computing devices 500. Similarly, functions of the computing device 500B may alternatively be completed by a plurality of computing devices 500.

An embodiment of this application further provides another computing device cluster. For a connection relationship between computing devices in the computing device cluster, refer to the connection manner in the computing device cluster in FIG. 6 and FIG. 7 similarly. A difference lies in that a memory 506 in one or more computing devices 500 in the computing device cluster may store same instructions used to perform the intelligent question answering method.

In some possible implementations, the memory 506 in the one or more computing devices 500 in the computing device cluster each may alternatively store a part of the instructions used to perform the intelligent question answering method. In other words, a combination of the one or more computing devices 500 may jointly execute the instructions used to perform the intelligent question answering method.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the intelligent question answering method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the intelligent question answering method.

It should be understood that "a plurality of" in this specification means two or more. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions and purposes. Persons skilled in the art may understand that the terms such as "first" and "second" do not limit a quantity and an execution sequence, and the terms such as "first" and "second" do not indicate a definite difference.

It should be noted that information (including but not limited to user equipment information, and personal information of a user), data (including but not limited to data used for analysis, stored data, and displayed data), and signals in embodiments of this application are used under authorization by the user or full authorization by all parties, and capturing, use, and processing of related data need to conform to related laws, regulations, and standards of related countries and regions.

Finally, it should be noted that the foregoing embodiments are merely intended to describe the technical solutions of this application other than limiting this application. Although this application is described in detail with reference to the foregoing embodiments, persons of ordinary skill in the art should understand that they may still make modifications to the technical solutions recorded in the foregoing embodiments or make equivalent replacements to some technical features thereof, without departing from the protection scope of the technical solutions of embodiments of this application.

## Claims

1. An intelligent question answering method, wherein the method is applied to a multi-user online service, and the method comprises:
receiving an original question;
determining an importance evaluation result of the original question, wherein the importance evaluation result indicates an answering importance degree of the original question, and the importance evaluation result is determined based on at least one evaluation influencing factor;
determining, based on the importance evaluation result, an answer corresponding to the original question in at least one candidate answer, wherein the at least one candidate answer has a different degree of detail; and
outputting the answer corresponding to the original question.

2. The method according to claim 1, wherein the method further comprises:
receiving an evaluation rule configuration request, wherein the evaluation rule configuration request is used to request to configure one or more of a type, a priority, and a weight of the at least one evaluation influencing factor.

3. The method according to claim 2, wherein the type of the at least one evaluation influencing factor comprises one or more of a questioner level, a question category, a question frequency, and answering indication information of the original question, the questioner level indicates importance of a questioner, the question category indicates whether the original question is a meaningless question, the question frequency indicates a historical questioning frequency of the original question, and the answering indication information indicates whether the original question has been answered within specified duration before current time.

4. The method according to claim 2 or 3, wherein determining the importance evaluation result of the original question comprises:
determining an evaluation result of the original question under the at least one evaluation influencing factor; and
determining the importance evaluation result of the original question based on the evaluation result of the original question under the at least one evaluation influencing factor.

5. The method according to any one of claims 1 to 3, wherein determining, based on the importance evaluation result, the answer corresponding to the original question in the at least one candidate answer comprises:
determining, based on the importance evaluation result, an answering policy of the original question in a correspondence between an importance evaluation result and an answering policy, wherein the answering policy indicates fixed-script answering, simple answering, or comprehensive answering, and a degree of detail of an answer corresponding to simple answering is lower than a degree of detail of an answer corresponding to comprehensive answering; and
determining, according to the answering policy, the answer corresponding to the original question in the at least one candidate answer.

6. The method according to claim 5, wherein the method further comprises:
determining, in a corpus database in a semantic clustering manner based on the original question, a target fundamental question corresponding to the original question, wherein the corpus database comprises a plurality of fundamental questions and a basic answer corresponding to each fundamental question; and
determining the at least one candidate answer based on a basic answer corresponding to the target fundamental question.

7. The method according to claim 6, wherein determining the at least one candidate answer based on the basic answer corresponding to the target fundamental question comprises:
obtaining at least one network answer through network searching based on the original question and/or the target fundamental question; and
generating the at least one candidate answer based on the basic answer corresponding to the target fundamental question and the at least one network answer.

8. The method according to claim 6, wherein the method further comprises:
receiving a corpus configuration request, wherein the corpus configuration request carries a plurality of fundamental question-answer corpus pairs, and each fundamental question-answer corpus pair comprises one fundamental question and a basic answer corresponding to the fundamental question; and
storing the plurality of fundamental question-answer corpus pairs in the corpus database.

9. The method according to claim 8, wherein the plurality of fundamental question-answer corpus pairs are fundamental question-answer corpus pairs corresponding to a plurality of levels, each level corresponds to at least one fundamental question-answer corpus pair, fundamental question-answer corpus pairs corresponding to different levels have different granularities, and the corpus configuration request further carries identifiers of the plurality of levels; and
storing the plurality of fundamental question-answer corpus pairs in the corpus database comprises:
storing, in the corpus database based on the identifiers of the plurality of levels, the fundamental question-answer corpus pairs corresponding to the plurality of levels.

10. The method according to claim 1, wherein the original question comprises a first question and a second question; and
outputting the answer corresponding to the original question comprises:
if determining, based on an importance evaluation result of the first question and an importance evaluation result of the second question, that a priority of the first question is higher than a priority of the second question, preferentially outputting an answer corresponding to the first question.

11. An intelligent question answering apparatus, wherein the apparatus comprises:
a question receiving module, configured to receive an original question;
a question evaluation module, configured to determine an importance evaluation result of the original question, wherein the importance evaluation result indicates an answering importance degree of the original question, and the importance evaluation result is determined based on at least one evaluation influencing factor;
an answer selection module, configured to determine, based on the importance evaluation result, an answer corresponding to the original question in at least one candidate answer, wherein the at least one candidate answer has a different degree of detail; and
an answer output module, configured to output the answer corresponding to the original question.

12. The apparatus according to claim 11, wherein the apparatus further comprises:
a first configuration module, configured to receive an evaluation rule configuration request, wherein the evaluation rule configuration request is used to request to configure one or more of a type, a priority, and a weight of the at least one evaluation influencing factor.

13. The apparatus according to claim 12, wherein the type of the at least one evaluation influencing factor comprises one or more of a questioner level, a question category, a question frequency, and answering indication information of the original question, the questioner level indicates importance of a questioner, the question category indicates whether the original question is a meaningless question, the question frequency indicates a historical questioning frequency of the original question, and the answering indication information indicates whether the original question has been answered within specified duration before current time.

14. The apparatus according to claim 12 or 13, wherein the question evaluation module is specifically configured to:
determine an evaluation result of the original question under the at least one evaluation influencing factor; and
determine the importance evaluation result of the original question based on the evaluation result of the original question under the at least one evaluation influencing factor.

15. The apparatus according to any one of claims 11 to 13, wherein the answer selection module comprises:
a policy determining unit, configured to determine, based on the importance evaluation result, an answering policy of the original question in a correspondence between an importance evaluation result and an answering policy, wherein the answering policy indicates fixed-script answering, simple answering, or comprehensive answering, and a degree of detail of an answer corresponding to simple answering is lower than a degree of detail of an answer corresponding to comprehensive answering; and
an answer selection unit, configured to determine, according to the answering policy, the answer corresponding to the original question in the at least one candidate answer.

16. The apparatus according to claim 15, wherein the apparatus further comprises:
a question clustering module, configured to determine, in a corpus database in a semantic clustering manner based on the original question, a target fundamental question corresponding to the original question, wherein the corpus database comprises a plurality of fundamental questions and a basic answer corresponding to each fundamental question; and
an answer determining module, configured to determine the at least one candidate answer based on a basic answer corresponding to the target fundamental question.

17. The apparatus according to claim 16, wherein the answer determining module is specifically configured to:
obtain at least one network answer through network searching based on the original question and/or the target fundamental question; and
generate the at least one candidate answer based on the basic answer corresponding to the target fundamental question and the at least one network answer.

18. The apparatus according to claim 16, wherein the apparatus further comprises:
a second configuration module, configured to receive a corpus configuration request, wherein the corpus configuration request carries a plurality of fundamental question-answer corpus pairs, and each fundamental question-answer corpus pair comprises one fundamental question and a basic answer corresponding to the fundamental question; and
a corpus storage module, configured to store the plurality of fundamental question-answer corpus pairs in the corpus database.

19. The apparatus according to claim 18, wherein the plurality of fundamental question-answer corpus pairs are fundamental question-answer corpus pairs corresponding to a plurality of levels, each level corresponds to at least one fundamental question-answer corpus pair, fundamental question-answer corpus pairs corresponding to different levels have different granularities, and the corpus configuration request further carries identifiers of the plurality of levels; and
the corpus storage module is specifically configured to:
store, in the corpus database based on the identifiers of the plurality of levels, the fundamental question-answer corpus pairs corresponding to the plurality of levels.

20. The apparatus according to claim 11, wherein the original question comprises a first question and a second question; and
the answer output module is specifically configured to:
if it is determined based on an importance evaluation result of the first question and an importance evaluation result of the second question that a priority of the first question is higher than a priority of the second question, preferentially output an answer corresponding to the first question.

21. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 10.

22. A computer program product comprising instructions, wherein when the instructions are run by a computing device cluster, the computing device cluster is enabled to perform the method according to any one of claims 1 to 10.

23. A computer-readable storage medium, comprising computer program instructions, wherein when the computer program instructions are executed by a computing device cluster, the computing device cluster performs the method according to any one of claims 1 to 10.
